Europäisches Patentamt

European Patent Office

Office européen des brevets

(11) Publication number: **0 332 341**
A1

# (12) EUROPEAN PATENT APPLICATION

(21) Application number: **89302075.0**

(22) Date of filing: **02.03.89**

(51) Int. Cl.⁴: **A61J 9/00**

(30) Priority: **08.03.88 GB 8805412**

(43) Date of publication of application:
**13.09.89 Bulletin 89/37**

(84) Designated Contracting States:
**AT BE CH DE ES FR GB GR IT LI LU NL SE**

(71) Applicant: **MICRO TECHNOLOGIES INTERNATIONAL LTD**
**Level 16 West Tower Bond Centre 89**
**Queensway Central**
**Hong Kong(HK)**

(72) Inventor: **Jezuchowski, Friedhelm**
**166-1 Hfing Yah Road**
**Tien Mou Taipei 11218(TW)**

(74) Representative: **Hitchcock, Esmond Antony et al**
**Lloyd Wise, Tregear & Co. Norman House**
**105-109 Strand**
**London WC2R 0AE(GB)**

(54) Baby bottle liner.

(57) A baby's bottle liner (10) made from high density polyethylene of a thickness of from 9 to 40 microns and stretched in the widthwise direction, by an amount of from 1:5 to 1:9.

Such a liner (10) has been fount to be strong and flexible enough to resist bursting and in addition its contents can be heated in a microwave oven.

EP 0 332 341 A1

# BABY BOTTLE LINER

This invention relates to baby's bottle liners.

Such liners are well known and have generally been made from polyethylene. They are convenient to use because they can be supplied in a sterile form and are disposable after use. Polyethylene liners, despite their widespread use are not suitable for use in a microwave oven to heat the milk and are also liable to burst if dropped or subjected to other forms of mechanical shock.

A baby's bottle liner according to the invention is made from high density polyethylene which has a final thickness of from 9 to 40 microns and has been stretched in the widthwise direction, ie. the direction transverse to the machine direction in which it has been extruded, by an amount of from 1:5 to 1:9.

We have found that such a material is both strong and flexible enough to resist bursting if the bottle is dropped accidentally and in addition the material is capable of having its contents heated in a microwave oven.

High density polyethylene is a known material and is widely available from chemical manufacturers such as Mitsubishi in Japan and Bayer and Hoest in Europe. Despite this no-one has previously used such a material for making baby's bottle liners despite the well known failings of liners made from polyethylene. High density polyetylene has a density typically of 0.9 to 1 and more preferably 0.95 to 1.

High density polyethylene is also suitable to meet the United State Food and Drug Administration (FDA) rules for materials in which food is heated in that the extractable fraction in n-hexane and the soluble fraction in xylene are very low in comparison with the maximum permissible limits and in addition the levels of leachable lead and cadmium from the material are also very low in comparison with the maximum permissible limits.

The bottle liner according to the invention is generally made by extruding a tubular length of material and this is then stretched in known fashion to the required final size and thickness. Thereafter lengths of the resulting tube are cut to size and one end sealed by a heat sealing step such as ultrasonic welding to complete the liner. The liners are sterilized, eg. with x-rays or gamma rays. Again the high density polyethylene used can readily be heat sealed and sterilized.

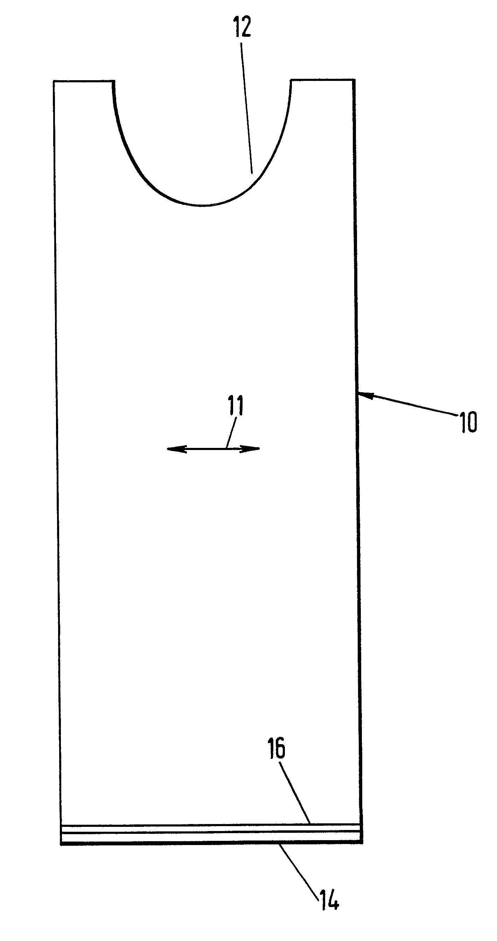

An example of a baby's bottle liner according to the invention will now be described with reference to the accompanying drawing.

The liner 10 has been made from high density polyethylene having a density of 0.952 and obtained from Mitsubishi in Japan. Initially a tube of the polyethylene was extruded and thereafter the tube was subjected to stretching widthwise, ie. in the direction of the arrow 11 which is transverse to the direction of extrusion, of about 6 times to a final thickness of 25 microns. A small degree of stretching occured lengthwise but this was small in comparison with the widthwise stretching. Thereafter the tube was cut to length and the upper end 12 shaped in a conventional fashion by a cutting operation. The lower end 14 was closed by an ultrasonic weld 16. Typically the final weight for a liner 210 mm long and 84 mm wide is 0.85g

Liners 10 were subjected to testing with the following results:

1. Drop test (containing 250 ml water from 1 metre height): Average 4 times before bursting

2. Tensile strength of edge (kg) measured on an Instron tester: Average 2.70

3. Tensile strength of heatseal (kg measured on an Instron tester): Average 2.32

4. Burst strength, Muller tester, (lb/in$^2$): 16.3

5. Leachable lead and cadmium content (ASTM C738-81 by atomic absorption spectophotometric analysis): lead < 0.1 PPM, FDA permissible limit 5 PPM, cadmium < 0.01 PPM, FDA permissible limit 0.5 PPM

6. Test for F.D.A. regulation on high density polyethylene:
extractable fraction in n-hexane: Average 0.755% (max limit 5.5%)
soluble fraction in xylene: Average 1.505% (max limit 11.3%)

7. Microwave proof test
heat to boiling for 15 seconds and no leakage
Information source: Labtest Taiwan Nov. 2, 1987.

## Claims

1. A baby's bottle liner made from high density polyethylene which has a final thickness of from 9 to 40 microns and which has been stretched in the widthwise direction, ie. the direction transverse to the machine direction in which it has been made, by an amount of from 1:5 to 1:9.

2. A liner as claimed in Claim 1 wherein the high density polyetylene has a density of between 0.9 to 1.

3. A liner as claimed in Claim 2 wherein the high density polyetylene has a density of between 0.95 to 1.

4. A liner as claimed in any preceding claim made by extruding a tubular length of material and then stretching the length of material to the required final size and thickness, severing the tube into lengths as required for a liner and sealing one end by a heat sealing step and they are to sterilizing the resulting liner.

5. A liner as claimed in claim 4 whereafter lengths of the resulting tube are cut to size, and one end sealed by a heat sealing step to complete the liner.

6. A liner as claimed in Claim 5 wherein the sealing step is ultrasonic welding.

7. A liner as claimed in any one of Claims 1 to 6 which is sterilized.

8. A liner as claimed in Claim 7 wherein the liner is sterilized with X-rays or gamma rays.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | BE-A- 489 092 (SHELLMAR PROD. CO.) <br> * Page 3, line 10 - page 5, line 13; figures * | 1,4,5,7 | A 61 J 9/00 |
| A | GB-A-1 054 515 (INTERN. LATEX CO.) <br> * Page 1, lines 11-20; page 3, lines 38-63,123-130; page 4, lines 30-59, figures * | 1,4,5,7 | |
| A | US-A-3 931 886 (AKIRA) <br> * Column 2, lines 23-50; figures * | 1,4,5 | |
| A | US-A-3 762 542 (GRIMES) <br> * Column 3, lines 51-60; column 5, lines 23-30; figures * | 1,7 | |
| A | FR-A- 991 990 (ALLEN) <br> * Page 6, right-hand column, lines 8-25 * | 1 | |
| A | GB-A-1 604 151 (TODA) <br> * Page 2, lines 94-99 * | 1 | TECHNICAL FIELDS SEARCHED (Int. Cl.4) <br><br> A 61 J <br> B 65 D |

The present search report has been drawn up for all claims

| Place of search | Date of completion of the search | Examiner |
|---|---|---|
| THE HAGUE | 09-06-1989 | BAERT F.G. |